# EUROPÄISCHE PATENTSCHRIFT

(11) **EP 0 711 937 B1**
(45) Veröffentlichungstag und Bekanntmachung des Hinweises auf die Patenterteilung: **19.04.2000**
(21) Anmeldenummer: 95114279.3
(22) Anmeldetag: 12.09.1995
(51) Int. Cl.: F16J 15/08

(54) **Metallische Zykinderkopfdichtung**
Metallic cylinder head gasket
Joint de culasse métallique

(30) Priorität: 12.11.1994 DE 4440503
(43) Veröffentlichungstag der Anmeldung: 15.05.1996
(73) Patentinhaber: Federal-Mogul Sealing Systems GmbH, 57562 Herdorf (DE)
(72) Erfinder: Papendorf, Jörg, Dipl.-Ing., D-51519 Odenthal-Glöbusch (DE); Krauland, Andreas, Dipl.-Ing., D-51467 Bergisch-Gladbach (DE); Heike, Matthias, Dipl.-Ing., D-38159 Vechelde (DE)

(56) Entgegenhaltungen:
- EP-A- 0 465 268
- EP-A- 0 468 526

## Beschreibung

Die Erfindung betrifft eine metallische Zylinderkopfdichtung für Brennkraftmaschinen, mit mindestens einem Dichtungsblech und einer die Brennraumöffnung umschließenden Sicke, wobei im Bereich der Brennraumöffnung ein die Sicke gegen Verformung schützender Ring angeordnet ist, welcher mit dem Dichtungsblech verbunden ist und aus einem metallischen Pulver besteht, daß durch Wärmebehandlung zu einem festen Körper verschmolzen ist.

Aus der EP 0 230 804 A 2 ist eine Zylinderkopfdichtung zu entnehmen. Die zur Abdichtung des Brennraumes notwendige Sicke der Zylinderkopfdichtung unterliegt während des Betriebes einem wechselnden Pressungsdruck. Um die Elastizität der Sicke während des Betriebes sicherzustellen, dürfen die Sicken weder beim Einbauen der Dichtung noch während des Betriebes des Motors völlig plattgedrückt werden. Um dies zu verhindern werden sogenannte Stopper eingebaut. Hierbei handelt es sich um Metallringe oder Metallscheiben, die als separate Scheibe oder als umgebogene Endstücke einen Vorsprung erzeugen der verhindert, daß die Sicke plattgedrückt werden kann. Der Nachteil solcher Systeme liegt darin, daß der Vorsprung in allen abzudichtenden Bereichen der Brennraumöffnung gleich hoch ist. Eine gezielte Flächenpressungsabstimmung ist somit nicht möglich.

Aus der EP-A-0465268 ist eine gattungsgemäße metallische Zylinderkopfdichtung bekannt. Der Stopper der Sicke wird durch aufschmelzen von Metall gebildet und zwar derart, daß das Material vor Aufbringen auf das Dichtungsblech einer Wärmebehandlung unterzogen wird, z. B. durch Flammspritzen. Das lose Aufbringen von metallischem Pulver wird nicht offenbart.

Der Erfindung liegt die Aufgabe zugrunde, eine gattungsgemäße Zylinderkopfdichtung im Hinblick auf die Stopperauflage zu verbessern, wobei eine zuverlässige Abdichtung für unterschiedliche konstruktive Ausgestaltungen erzeugt wird und die Herstellungskosten gesenkt werden.

Diese Aufgabe wird erfindungsgemäß durch die Merkmale des Anspruch 1 oder 2 gelöst. Die Verwendung von Metallpulver erlaubt eine definierte Anpassung der Stopperhöhe an die konstruktiven Gegebenheiten im Motor. So kann über den Umfang die Höhe und/oder Breite des Stopperrings verändert werden ohne daß zusätzliche Kosten entstehen. Es brauchen für unterschiedliche Brennraumdurchmesser keine unterschiedliche Ringscheiben bevorratet zu werden. Für jeden Motor kann eine individuelle Kontur bereitgestellt werden.

Eine vorteilhafte Ausgestaltung der Erfindung ergibt sich aus dem Unteranspruch.Die Stopperauflage erfolgt durch ein zweistufiges Laserauftragsverfahren. Im ersten Arbeitsgang wird mit Hilfe des Siebdruckverfahrens ein Pulver auf das Dichtungsblech aufgebracht. Dieses Pulver wird dann mit einem Laser angeschmolzen und mit dem Dichtungsblech verbunden. Der Laser kann im Pulverschweißverfahren oder kontinuierlich eingesetzt werden.

Die Erfindung ist in der Zeichnung anhand eines Ausführungsbeispieles dargestellt und wird im folgenden näher erläutert. Es zeigen:
- Fig. 1: Aufsicht einer erfindungsgemäßen Flachdichtung
- Fig. 2: Ansicht gemäß Schnitt II - II aus Fig. 1

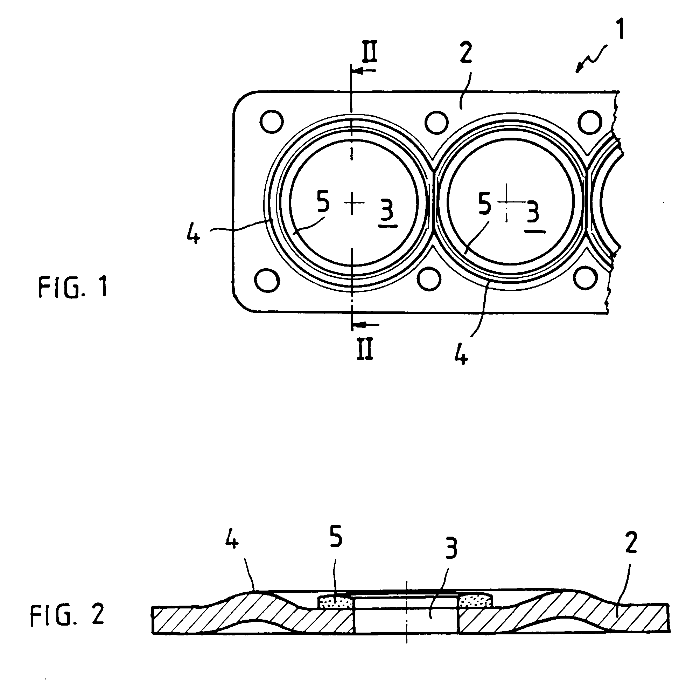

Die in der Figur 1 dargestellte Zylinderkopfdichtung (1) besteht im wesentlichen aus einem Dichtungsblech (2) aus Federstahl mit einer die Brennraumöffnung (3) umschließenden Sicke (4). Damit die Sicke beim Einbau oder während des Motorbetriebes nicht vollständig plattgedrückt werden kann, ist im Bereich der Brennraumöffnung (3) ein metallischer Ring (5) (Fig. 2) vorgesehen, welcher als Stopper fungiert. Der Ring (5) ist im Siebdruckverfahren als metallisches Pulver auf das Dichtungsblech (2) aufgetragen. Das Pulver wird mit Hilfe von Laserstrahlen zu einem festen Körper verschmolzen, dabei wird das Pulver gleichzeitig mit dem Dichtungsblech (2) verbunden, indem es an das Dichtungsblech (2) angeschweißt wird.

## Patentansprüche

1. Metallische Zylinderkopfdichtung (1) für Brennkraftmaschinen, mit mindestens einem Dichtungsblech (2) und einer die Brennraumöffnung (3) umschließenden Sicke (4), wobei im Bereich der Brennraumöffnung (3) ein die Sicke (4) gegen Verformung schützender Ring (5) angeordnet ist, welcher mit dem Dichtungsblech (2) verbunden ist und aus einem metallische Pulver besteht, das durch Wärmebehandlung zu einem festen Körper verschmolzen ist, dadurch gekennzeichnet, daß der schützende Ring (5) mit dem Dichtungsblech (2) dadurch verbunden ist, daß das den Ring (5) bildende metallische Pulver lose auf das Dichtungsblech (2) aufgebracht und danach mittels einer Laserstrahlung zu einer mit dem Dichtungsblech (2) verbunden Ringform verschmolzen ist.

2. Verfahren zur Herstellung einer metallischen Zylinderkopfdichtung (1) für Brennkraftmaschinen, mit mindestens einem Dichtungsblech (2) und einer die Brennraumöffnung (3) umschließenden Sicke (4), wobei im Bereich der Brennraumöffnung (3) ein die Sicke (4) gegen Verformung schützender Ring (5) angeordnet ist, welcher mit dem Dichtungsblech (2) verbunden ist und aus einem metallischen Pulver besteht, das durch Wärmebehandlung zu einem festen Körper verschmolzen ist, dadurch gekennzeichnet, daß das d en Ring (5) bildende metallische Pulver lose auf das Dichtungsblech (2) aufgebracht und danach mittels einer Laserstrahlung verschmolzen und mit dem Dichtungsblech (2) verbunden wird.

3. Verfahren nach Anspruch 2, dadurch gekennzeichnet, daß die Aufbringung des Pulvers im Siebdruckverfahren erfolgt.

## Revendications

1. Joint métallique (1) de culasse de cylindre pour machine à combustion interne comportant au moins une tôle d'étanchéité (2) et une moulure (4) entourant l'ouverture de l'espace de combustion (3), un anneau (5) protégeant la moulure (4) contre une déformation étant disposé dans la zone de l'ouverture de l'espace de combustion (3), ledit anneau (5) étant relié à la tôle d'étanchéité (2) et étant constitué d'une poudre métallique qui est fondue par un traitement thermique pour former un corps solide, caractérisé en ce que l'anneau de protection (5) est relié à la tôle d'étanchéité (2) de telle sorte que la poudre métallique formant l'anneau (5) est appliquée de manière fluide sur la tôle d'étanchéité (2) et est ensuite fondue au moyen d'un rayonnement laser en une forme annulaire reliée à la tôle d'étanchéité (2).

2. Procédé de fabrication d'un joint métallique (1) de culasse de cylindre pour machine à combustion interne comportant au moins une tôle d'étanchéité (2) et une moulure (4) entourant l'ouverture de l'espace de combustion (3), un anneau (5) protégeant la moulure (4) contre une déformation étant disposé dans la zone de l'ouverture de l'espace de combustion (3), ledit anneau (5) étant relié à la tôle d'étanchéité (2) et étant constitué d'une poudre métallique qui est fondue par un traitement thermique pour former un corps solide, caractérisé en ce que la poudre métallique formant l'anneau (5) est appliquée de manière fluide sur la tôle d'étanchéité (2) et est ensuite fondue au moyen d'un rayonnement laser et reliée à la tôle d'étanchéité (2).

3. Procédé selon la revendication 2, caractérisé en ce que la mise en place de la poudre est effectuée par sérigraphie.

## Claims

1. Metallic cylinder head gasket (1) for internal combustion engines, which has at least one sealing plate (2) and a bead (4) surrounding the opening (3) of the combustion chamber, there being arranged in the region of the combustion chamber opening (3) a ring (5) protecting the bead (4) against deformation and which is connected to the sealing plate (2) and consists of a metallic powder which is melted by heat-treatment to form a solid body, **characterised in that** the protective ring (5) is connected to the sealing plate (2) by the metallic powder, forming the ring (5), being applied loose to the sealing plate (2) and thereafter melted by means of laser irradiation to form a ring shape connected to the sealing plate (2).

2. Method of manufacturing a metallic cylinder head gasket (1) for internal combustion engines, which has at least one sealing plate (2) and a bead (4) surrounding the opening (3) of the combustion chamber, there being arranged in the region of the combustion chamber opening (3) a ring (5) protecting the bead (4) against deformation and which is connected to the sealing plate (2) and consists of a metallic powder which is melted by heat-treatment to form a solid body, **characterised in that** the metallic powder forming the ring (5) is applied loose to the sealing plate (2) and thereafter melted by means of laser irradiation and connected to the sealing plate (2).

3. Method according to claim 2, **characterised in that** the powder is applied in a screen-printing process.
